# EUROPEAN PATENT SPECIFICATION

(11) **EP 2 890 943 B1**
(45) Date of publication and mention of the grant of the patent: **24.08.2016**
(21) Application number: 13785925.2
(22) Date of filing: 28.08.2013
(51) Int. Cl.: F27B 7/16

(54) **HEAT TRANSFER CHAIN WITH ELLIPTICAL SECTION WIRE LINKS FOR HIGH DURABILITY AND ENHANCED HEAT TRANSFER IN TEMPORARY OPERATION**
WÄRMEÜBERTRAGUNGSKETTE MIT DRAHTVERBINDUNGEN MIT ELLIPTISCHEM QUERSCHNITT FÜR HOHE LEBENSDAUER UND VERBESSERTE WÄRMEÜBERTRAGUNG IN TEMPORÄREM BETRIEB
CHAÎNE DE TRANSFERT DE CHALEUR PRÉSENTANT DES LIAISONS À FIL À SECTION ELLIPTIQUE POUR UNE DURÉE DE VIE ÉLEVÉE ET TRANSFERT DE CHALEUR AMÉLIORÉ EN FONCTIONNEMENT TEMPORAIRE

(30) Priority: 28.08.2012 CO 12146381
(43) Date of publication of application: 08.07.2015
(73) Proprietor: Fundacion Universidad Del Norte, Puerto Colombia 080010 (CO); Cementos Argos S.A., Barranquilla 080010 (CO)
(72) Inventor: MAURY, Heriberto, Puerto Colombia 080010 (CO); SANJUAN, Marco, Puerto Colombia 080010 (CO); BULA, Antonio, Puerto Colombia 080010 (CO); VERGARA, Jaime, Barranquilla 080010 (CO)
(74) Representative: ABG Patentes, S.L.
(86) International application number: PCT/IB2013/058086
(87) International publication number: WO 2014/033646

(56) References cited:
- DE-A1-102008 046 992
- US-A- 3 544 092
- US-A- 4 498 284
- US-A- 6 006 514
- US-B1- 7 389 634
- US-B1- 8 172 448

## Description

### 1. Background art

The use of linked chains for heat transfer applications between two fluids and particle retention is a common application in such industries as the concrete, petrochemical, ceramics, and fertilizer industries, amongst others. Its application is commonly observed in drying procedures or chemical reactions in tubular furnaces, where they act as heat receptors and generators, improving the transfer between both fluids (for example, hot has and liquid or slurry), due to better conductivity and heat capacitance of solids with respect to liquids and gases.

Traditional chain configuration is obtained from links manufactured from circular-section wires. Reviewing prior art, the following inventions are noted:

US patent 3135504, filed in 1962, discloses a link chain oven formed by bent metallic bars, with parts of the surface protruding and part of the surface recessed, i.e., steel rods for concrete structure reinforcement. This patent is directed towards obtaining better heat efficiency, given chains have a greater surface area per link. However, this type of configuration allows particle accumulation within the surface recesses, especially if there is humidity in the environment wherein said transfer is performed. Said material accumulation produces a heat resistance which contradicts the chain design principle: "easy heat capture, easy heat generation". Therefore, its thermal efficiency is not sustainable in operation conditions.

US patent 3281134 filed in 1964, discloses a rounded triangular-section link chain, where its self-cleaning action, obtained by the most acute edge of the triangular section, is emphasized in its claim set. This invention is able to remove the material accumulation inside the link, and argues it improves heat transfer due to its self-cleaning effect. It also indicates it improves the area-mass ratio. Said triangular geometry has a fairly flat face parallel to the flow line, which prompts a thickening of the edge layer (due to its better aerodynamic behavior), reducing the heat transfer global coefficient. From a durability standpoint, said triangular section has lesser inertia with regards to the link's flexion plane when the chain is subject to traction (which occurs when the chain is exiting the bed to which heat is being transferred to).

US patent 3544092 filed in 1970, discloses a link chain for minimizing material accumulation, leading to more efficient heat transfer. This patent focuses on gaining greater heat transfer through a cleaning effect, without its claims evidencing neither an area/mass ratio used nor a mechanical effect on the material of the geometry used. This prior art presents two groups of claims.

Group 1. Claims 1-10 address a link made from wire wherein the link interior surface "is shaped in order to obtain a significant point of contact". The illustrations included in said patent, show how a bulge is shaped on the wire whereby upon making the link, a minimum point of contact is created between said bulges of adjacent links. This type of design produces elevated contact stresses in the zone. In addition, these localized bulges, because they have a very high area/mass ratio in their neighborhood, compared to the rest of the cross section, become hot spots thus deteriorating the mechanical properties of the material; hence, affecting its durability.

Group 2. Claims 11-14 address a link having arched interior and exterior surfaces. These claims imply that the periphery of the cross section is made up of by at least four surfaces, one interior surface (the bottom image seen on the cross section image), one exterior (the top image seen on the cross section image), and two side surfaces, whereby the interior and exterior surfaces are arched, i.e., arcs which are circumference segments. Claim 14 describes an oblong geometry (straight sides joined by arcs on the ends). This geometry has a better area/mass ratio than the circular section link, generating a greater heat transfer area for chains having the same weight, thus increasing energy gained. From a fluid interaction standpoint, the flat faces prompt standstill zones, requiring greater fluid energy in order to overcome the obstacle. Said phenomenon at a macro level, for example a chain link rotating furnace, implies a greater pressure drop in the chain section, requiring greater equipment capacity (such as the draft blower fan). Likewise, at a global scale, the repetition of these standstill zones reduces the heat transfer global coefficient in a localized manner, thus limiting increasing efficiency obtained through a better area/mass ratio.

Patents CA 1129647 (1979), US 4244687 (1979), US 5934062 (1997), RU 1013717A (1999) disclose chains for rotating furnaces using multi-bodied links. These chains, beyond the wire's cross section geometry, are shaped by more than one type of element, either a link and lock or two types of links (one transfer link, greater mass, and the other a connecting link, having lesser mass). The multi-bodied arrays comprise an operating principle which is quite different to that of the instant invention, given a multi-bodied link contains additional thermal resistances in the excess contact surfaces. In the case of chain curtains wherein a same orientation is intended for the primary links through the use of small connectors, these end up using part of the available chain length. The flat sections presented in two of these applications for the primary links, do not exhibit improved heat transfer behavior compared to chains already existent in the art. However, these rectangular profiles shall comprise a comparison reference in the instant application.

RU patent 2285217 C1 (2005) discloses a chain for a rotating furnace having hollow or grooved links. This development presents two variants and combinations thereof, the variants being namely: (a) a hollow wire link, (b) a wire link having any geometrical shape with at least one groove, and (c) a combination thereof. Variant (a) allows reducing the link's thermal inertia, thus increasing its heat transfer rate, by concentrating mass where it is most needed (exterior). Variant (b) allows increasing heat transfer by increasing the surface area, given the grooved geometry has greater area compared to the geometry of reference. In neither case do the claims address the chain's durability. Although the heat transfer rate effects are undeniable in the hollow chain, it is also evident that upon the progressive wear and tear due to friction and temperature of the rotating furnace, its shelf life is lesser than that of a solid chain (loss of wall thickness leads to inertia reduction, implying greater deformation and stress when subject to bending). As to grooved geometry, the increase in surface area is obtained due to grooves which act as material accumulation zones leading to additional thermal resistances (lesser heat transfer). This principle is contrary to the 1966 and 1970 prior arts, preoccupied by the self-cleaning effect in order to eliminate layers of deposited material.

Jammbco Division, a US company, discloses since 2008 in its webpage a diamond-shaped chain (Heat-X type) (http://www.jammbco.com/chains.php). The company's webpage indicates its development is patented but a patent database search showed no results. This chain is made of diamond-shaped cross section links, having rounded edges on the interior and exterior surfaces (top and bottom of the image). This geometric shape differs from the claimed shape herein, given its design addresses large links (larger than the circular links), which typically have about 50% more area than the circular links. Said area concentration implies a lesser amount of chains in the installation. This prior art serves as a comparison reference to the present invention. By concentrating the transfer area and flow blockage in fewer chains, in comparison to circular links, this leads to particle reduction due to capture, but this also reduces particle drag rate.

US patent 7.389.634 B1 (2007) discloses a load chain having links made of several shapes in order to improve the resistance/weight ratio. This development shows designs of several links (grooved, oval, elliptical) for load applications (load chains). Several of these link designs were already found in the heat transfer chain art (and patented) (such as the grooved and oval-shaped discussed above), and were protected because, although both were chains, their operating principle differs (tensile load versus heating/cooling cycles). The patent points out that the advantage of the links disclosed, including the elliptical link, is based on the stress distribution when subject to an external tensile load, typical load chain operating context. The primary difference with the link herein, is that the present invention refers to heat transfer chains, wherein the link's objective is not structural; in fact, the general operating condition is not strained, and it main load is the chain's weight. Therefore, said prior art does not interfere with the design principle used in the present invention, nor the scope of application thereof. Consequently, said prior art does not affect novelty herein (limited to heat transfer chains), in the same way previously protected grooved or oval-shaped heat transfer chains did not affect novelty of the load chain protected by the mentioned prior art. Likewise, inventive step is not affected since the design concept, oriented towards durability based on heat flow, gradients and precipitate reduction, does not exist in any of the cited prior art.

### 2. Brief description of the figures

For a better understanding of the instant invention, this document contains the following figures:
Figure 1 shows a frontal view and cross-section of the elliptical link.
Figure 2 shows the heat flow lines in the elliptical link and other link types in the art.
Figure 3 shows carbide precipitation in an elliptical and circular link in a heat exchange chain after 6 months of operation.

### 3. Summary of the invention

The use of link chains in rotating furnaces or reactors allows for the improvement of heat transfer between two contacting fluids. Material selection depends on the application, and although the heat capture and generation is important, the durability thereof is equally important, since typically tubular furnaces or reactors are continuous operating equipment, wherein chain replacement halts imply losses due to non-production. Since metals are the materials commonly used in link manufacturing, and because the chains are in cyclic operation (in contact with a high temperature fluid and another low temperature fluid), the chain material is subject to thermal cycles and subject to mechanical wear (friction with processed materials and other links).

The design principle of the present invention consists in the greater the transition rate between both states (high and low temperature), lesser the time will the alloy elements have to react and precipitate. As deduced from the above, it is the link surface that actually experiments the largest gradients; therefore, it is the core of the design. In order to prompt a better transition between states, it is desirable that the heat flow lines on the surface do not experiment superficial discontinuities, since heat flow slows down in those zones, giving more time to precipitates. These discontinuities are evidenced in those designs which use more than one geometric shape in order to generate the link section (such as triangular, oblong, those having budges, or diamond-shaped). When using more than one surface-generating curve, heat flow slowdown or standstill zones appear in said transitions, prompting localized precipitation, hardening and ultimate accelerated wear of the surface. Only the circular section wire link chain in prior art allows for continuous and soft heat flow lines on the surface (this is the chain used in the majority of rotating furnaces worldwide).

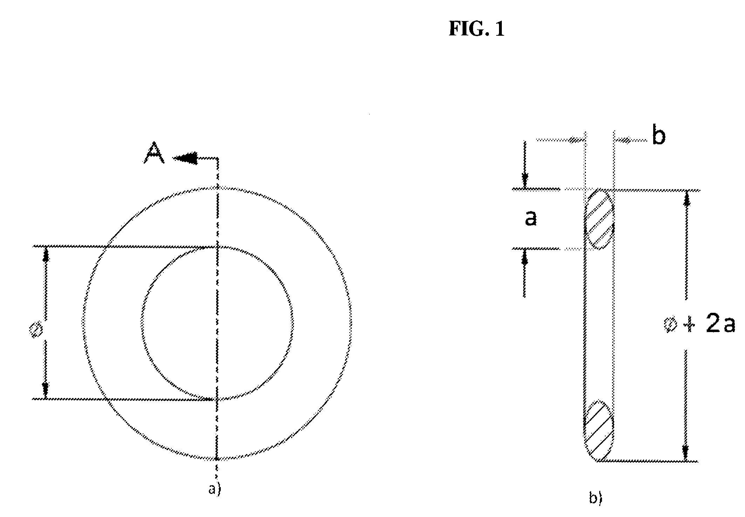

Complying with the above requirement of avoiding superficial discontinuities, and under the additional requirement of increasing the area/mass ratio in order to improve heat transfer efficiency, the present invention arises. This invention consists in the development of a wire circular link having an elliptical cross section with a radial greater axis, i.e., the greater axis contained within the link's circular plane, as noted in Figure 1. The elliptical cross section allows for a contact surface that is unique in the art, continuous in order to prevent hot spots or standstill zones (thus increasing durability), and with greater link surface area : link mass ratio (equivalent to cross section perimeter : cross section area) than the circular wire chain.

Figure 1a) showing the chain's frontal view, allows identifying the following: (i) link's internal diameter Φ, defining the chain's path, and (ii) the section generated by the cross section A, carried out vertically on a typical chain link positioned vertically (when its anchoring point is found towards the highest part of the furnace). The section of section A shown in Figure 1b) allows identifying the following: (i) the greater axis, a, of the wire link's elliptical cross section, lined up with the diameter Φ, in such a way the exterior diameter of the link is Φ + 2a, and (ii) the lesser axis, b, who determines the link's thickness. The elliptical section wire is obtained by plastic deformation from a circular section wire.

Upon obtaining the softening of the heat flow lines on the surface by using this design, phase precipitation is reduced in alloy manufactured chains, thus increasing the chain's shelf life two to three-fold compared to the circular wire chain, when the greater axis : lesser axis ratio of the ellipse varies between 1.5 and 3. In addition, because said chain has a greater area projected axially inside the furnace as a result of a lesser percentage of area per link, particle material capture is increased (thus reducing raw material loss through heat flow).

### 4. Detailed description of the invention

The preferred embodiment is developed for clinkerization rotating furnaces in the concrete industry. In this case, a heat transfer chain is designed having a length 0.6 times the internal diameter of the furnace in order to allow an aperture for slurry flow and free area, in such a manner the chain is completely exposed to hot gases (in order to gain heat).

When the chain is optimized for durability (superficial uniformity), heat transfer (area/mass ratio) and a section projected to flow (particle capture and pressure loss inside the furnace), based on the link presented herein, an elliptical link is obtained having a greater axis to lesser axis ratio equal to 2, and overall dimensions as follows: greater diameter 31mm, lesser diameter 15.5mm. The elliptical section wire is manufactured from stainless steel for the chains proximal to the heat source, and simple steel for those chains distal from the heat source.

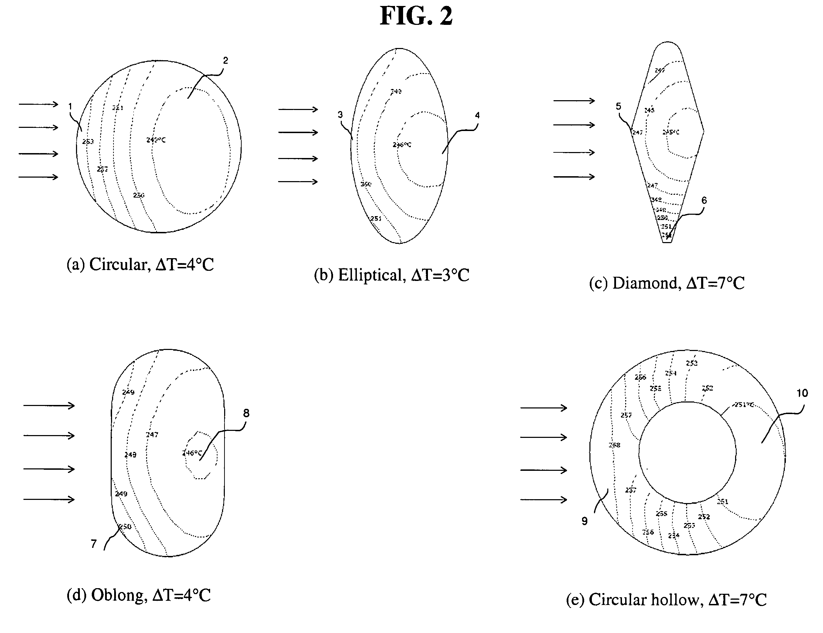

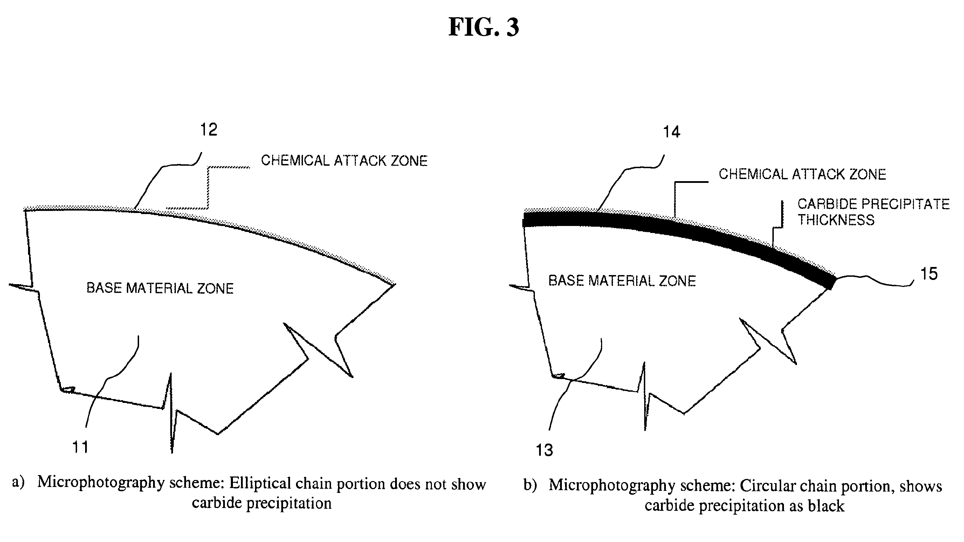

Figures 2 and 3 show the behavior of the new design with respect to the chains found in prior art. Figure 2 present the evolution of the temperature curves (isotherms), whose gradients indicate the heat flow lines. These curves were obtained through computer simulation exposing the link in a flow from left to right. For the circular link (a), the difference between zone (1) and zone (2) is 4°C, and isotherm curves breaking over the surface projected to the flow are observed. In the case of the elliptical link (b), it is noted that the difference between zone (3) and zone (4) is close to 3° C, and the 250° C isotherm essentially covers the entire face exposed to the flow, generating soft heat flow lines. When observing the diamond-shaped section link (c), it is noted that the temperature difference between zone (5) and zone (6) reaches 5° C, and that isotherm lines have more abrupt endings at the surface. For the oblong cross section link (d), the difference between zone (7) and (8) is 4° C, and there is an abrupt ending of isotherms at the surface exposed to flow. Finally, re the circular hollow cross section link (e), differences between zone (9) and (10) of up to 7° C are observed, and discontinuities in the isotherms (and thus in the heat flow lines) prompted by the interior cavity.

Figure 3 allows observing the metallography scheme obtained after six months of operation of the elliptical link chain and the circular link chain, manufactured from the same material and operating side by side. For the elliptical link metallography (a) two zones are only identified: the material base zone (11) and the chemical attack zone (12) for metallography preparation. For the circular link metallography (b) three zones are identified: the material base zone (13), the chemical attack zone (14) for metallography preparation and the precipitated carbide zone (15). This last zone is the one which prompts the superficial fragilization of the chain, and its ultimate loss of thickness, leading to a greater change frequency thereof.

### Preferred Embodiment Performance

In a real application of a clinkerization furnace, the entire circular wire chains were replaced with elliptical wire chains, maintaining the total surface area of the chains constant (heat exchange total area). For this area, the total requirement of installed mass was 10% less than the mass installed for the circular wire link.

The typical operating conditions of the furnace implied that by using the circular wire link chain installed area, a 2% slurry exit humidity and a determined exit slurry temperature was obtained. With the installation of the same surface area (10% less in chain mass), the slurry exit conditions changed to a 0% humidity and a 47% greater slurry exit temperature. In both cases, the production level was the same. This allowed to reduce even more the installed surface area (up to 20%), and thus obtaining a caloric consumption of at least 5% less, and with less dispersion (half the variation range), than that obtained with the circular link, and a particle emission reduction of 15% with respect to the value obtained using circular links, leading to a proportional increase in production, verifiable from a material balance.

With respect to durability, the design core of this invention, new sample chains were installed (circular and elliptical), and after 8 months operation the circular wire chains lost 17.5% of their mass (carbon steel chains) and 19.4% (stainless steel chains). In contrast, the elliptical wire chains lost 2.3% of their mass (carbon steel chains) and 4.0% (stainless steel chains). This important reduction in chain wear rate implies that the chain's durability (shelf life) is increased at least three-fold. Upon evaluating the chains' features, the design concept and the performance observed, it may be concluded that although there is a superficial hardness increase during manufacture, it is the significant reduction in carbide precipitation in the elliptical chain which allows for the significant chain shelf life increase, reducing the phenomenon known as "peeling".

## Claims

1. A heat exchange chain **characterized in that** it comprises elliptical cross section circular links.

2. The chain of Claim 1, wherein the elliptical cross section has its greater axis lined up in the diametrical direction of the circular link.

3. The chain of Claim 1, wherein the links are steel alloys or carbon steel.

4. The chain of Claim 1, wherein the greater axis : lesser axis ratio of the ellipse is greater than 1.5 and less than 3.

5. The chain of Claim 4, wherein the greater axis : lesser axis ratio is equal to 2.

## Patentansprüche

1. Wärmetauschkette,
**dadurch gekennzeichnet, dass**
sie ringförmige Kettenglieder mit einem elliptischen Querschnitt umfasst.

2. Wärmetauschkette nach Anspruch 1, wobei der elliptische Querschnitt seine größere axiale Erstreckung in einer Richtung diametral zu dem ringförmigen Kettenglied aufweist.

3. Wärmetauschkette nach Anspruch 1, wobei die Kettenglieder aus einer Stahllegierung oder einem Kohlenstoffstahl sind.

4. Wärmetauschkette nach Anspruch 1, wobei das Verhältnis zwischen der größeren axialen Erstreckung und der kleineren axialen Erstreckung der Ellipse größer als 1,5 und kleiner als 3 ist.

5. Wärmetauschkette nach Anspruch 4, wobei das Verhältnis zwischen der größeren axialen Erstreckung und der kleineren axialen Erstreckung gleich 2 ist.

## Revendications

1. Chaîne d'échange de chaleur, **caractérisée en ce qu'**elle comprend des liens circulaires de section transversale elliptique.

2. Chaîne de la revendication 1, dans laquelle la section transversale elliptique a son axe le plus grand aligné dans la direction diamétrale du lien circulaire.

3. Chaîne de la revendication 1, dans laquelle les liens sont des alliages d'acier ou de l'acier au carbone.

4. Chaîne de la revendication 1, dans laquelle le rapport entre l'axe le plus grand et l'axe le moins grand de l'ellipse est supérieur à 1,5 et inférieur à 3.

5. Chaîne de la revendication 4, dans laquelle le rapport entre l'axe le plus grand et l'axe le moins grand est égal à 2.
